# DEMANDE DE BREVET EUROPEEN

(11) **EP 2 447 340 A1**
(43) Date de publication de la demande: **02.05.2012**
(21) Numéro de dépôt: 11290455.2
(22) Date de dépôt: 30.09.2011
(51) Int. Cl.: C10G 59/00, C10G 35/04, C10G 31/06, C10G 47/00, C07C 5/32

(54) **Procédé de reformage de coupes hydrocarbonées**

(30) Priorité: 28.10.2010 FR 1004245
(71) Demandeur: IFP Energies Nouvelles, 92852 Rueil Malmaison Cedex (FR)
(72) Inventeur: Sanchez, Eric, 69230 Saint Genis Laval (FR); Rault, Jacques, 75012 Paris (FR); Le Goff, Pierre-Yves, 75011 Paris (FR); Pierre, Christophe, 78420 Carrierres sur Seine (FR); Fernandes, Joana, 2660 Santo Antonio dos Cavaleir (PT)

(57) **Abrégé**

Procédé de reformage d'une charge composée d'une ou plusieurs coupes hydrocarbonées comprenant entre 9 et 22 carbones comprenant:
- au moins une première étape de reformage, dans au moins une unité de reformage, de la charge au cours de laquelle un flux d'hydrogène est produit,
- au moins une première étape de distillation de l'effluent issu de l'unité de reformage en présence d'un catalyseur de reformage permettant d'obtenir 4 coupes:
○ une coupe de gaz de pétrole liquéfié (GPL) (A),
○ une coupe C5 - C8 : Naphta (B),
○ une coupe C9 - C15 kérosène densifié (C),
○ une coupe C16 - C22 : Coupe Gasoil densifié (D).

L'invention concerne également le dispositif mettant en oeuvre ce procédé.

## Description

L'invention concerne le domaine du procédé de reformage catalytique de coupes hydrocarbonées, et plus particulièrement un procédé de reformage catalytique en lit mobile de coupes hydrocarbonées ayant un nombre de carbones compris entre 9 et 22 issues de la technologie XTL (composés X To Liquid selon la terminologie anglo-saxonne) consistant à transformer du gaz , de la biomasse et /ou du charbon en carburant, ou issues de l'hydrotraitement d'huiles végétales ou animales.

L'utilisation croissante de ressources alternative et/ou renouvelables, comme la biomasse, le gaz et/ou le charbon par les technologies de type XTL (comprenant la technologie BTL pour Biomasss To Liquid selon la terminologie anglo-saxonne, la technologie CTL pour Coal To Liquid selon la terminologie anglo-saxonne, la technologie GTL pour Gaz To Liquid selon la terminologie anglo-saxonne), les produits issus de l'hydrotraitement d'huiles végétales ou animales afin de produire des bases carburants pour le raffinage conventionnel, l'utilisation de brut de plus en plus lourds et la recherche de la valorisation maximale de la fraction 350°C ou 550°C par le procédé de désasphaltage ainsi que les changements de spécifications des fiouls de soute fait qu'il est important de maximiser la production de distillat moyen à basse teneur en soufre et de pouvoir fluxant amélioré (par effet aromatiques). De plus le bilan hydrogène de la raffinerie est également amélioré permettant ainsi de faire des économies notable en terme de dépenses d'exploitation et de dépenses d'investissement de capital (CAPEX et OPEX). Le distillat moyen étant défini comme une coupe hydrocarbonée principalement composée de paraffines et isoparaffines longues dont le nombre de carbones varie entre 9 et 22.

Les distillats moyens issus des procédés XTL ou issues de l'hydrotraitement d'huiles végétales ou animales présentent tous quelque soit l'origine de la charge (biomasse, gaz , charbon, déchet ménagé ..) une faible densité. La nécessité de respecter les spécifications finales des produits commerciaux principalement la densité conduit donc à utiliser ces distillats moyens, pour l'instant, en mélange avec un distillat plus lourd issus du pétrole brut à hauteur de 50/50 et par exemple avec des composés de type alkylbenzene afin d'augmenter la densité des produits.

La présente invention concerne donc un nouveau procédé permettant de s'affranchir de la problématique de mélange et/ou additif avec un ou des produits issus de ressources fossiles afin de pouvoir répondre aux spécifications commerciales du marché pour les coupes issues de technologie XTL ou issues de l'hydrotraitement d'huiles végétales ou animales et de permettre de maximiser la production de distillat moyen à basse teneur en soufre et de pouvoir fluxant amélioré pour les coupes de raffinerie conventionnel (ex énergie fossile).

Le nouveau procédé objet de la présente invention est un procédé de reformage catalytique du distillat moyen, c'est-à-dire composé de coupes hydrocarbonées ayant un nombre de carbone compris entre 9 et 22, permettant de densifier le distillat moyen en le convertissant tout ou partie en aromatiques et polyaromatiques

Le procédé continu de reformage catalytique des hydrocarbures est un procédé connu de l'homme du métier, il fait appel à une zone réactionnelle comportant une série de 3 ou 4 réacteurs en série, travaillant en lit mobile, et présente une zone de régénération du catalyseur qui comprend elle même un certain nombre d'étapes, dont une étape de combustion du coke déposé sur le catalyseur dans la zone réactionnelle, une étape d'oxychloration, et une étape finale de réduction du catalyseur à l'hydrogène. Après la zone de régénération, le catalyseur est réintroduit en tête du premier réacteur de la zone réactionnelle.

Il est connu de transformer des paraffines courtes en aromatiques (nombre d'atome de carbone inférieur à 10-12) avec le procédé de reforming, via des réactions de cyclisation et déshydrogénation, ce schéma réactionnel étant connu sous le nom de déshydrocyclisation.

La déshydrocyclisation de paraffines longues (nombre d'atome de carbone supérieur à 12) n'est par contre pas mise en oeuvre pour différentes raisons et notamment :
- sur les paraffines longues, les seuls procédés industrielles existant consistent en une déshydrogénation pour l'obtention d'oléfines et ne recherche surtout pas la cyclisation pour aller jusqu'au aromatiques afin de respecter les spécifications commerciales du produit final (LAB pour linear alkyl Benzene selon la terminologie anglo-saxonne)
- la déshydrocyclisation de paraffines longues s'accompagne, sur des catalyseurs standards, d'une production de coke importante et les procédés de régénérations standards ne permettent pas de brûler des quantités de coke importantes de façon continue tout en conservant au catalyseur des propriétés physicochimiques adéquates pour la réaction de déshydrocyclisation.
- La déshydrocyclisation de paraffines longues s'accompagne, sur des catalyseurs standards, d'un craquage important. Ce craquage inhibe la formation des aromatiques et poly aromatiques, objet de l'invention et limite les rendements en produit valorisable.

La présente invention a donc pour objet de palier un ou plusieurs des inconvénients de l'art antérieur en proposant un nouveau procédé de reformage sur des coupes hydrocarbonées comportant un nombre de carbone compris entre 9 et 22 permettant d'une part de s'affranchir de la problématique de mélange et/ou additif avec un ou des produits issus de ressources fossile afin de pouvoir répondre aux spécifications commerciales du marché et d'autre part de palier aux problèmes habituellement rencontrés lors de la mise en oeuvre d'un procédé de reformage sur des coupes hydrocarbonées de plus de 12 carbones.

Pour cela la présente invention propose un procédé de reformage d'une charge composée d'une ou plusieurs coupes hydrocarbonées comprenant entre 9 et 22 carbones comprenant:
- au moins une première étape de reformage, dans au moins une unité de reformage, de la charge au cours de laquelle un flux d'hydrogène est produit,
- au moins une première étape de distillation de l'effluent issu de l'unité de reformage en présence d'un catalyseur de reformage permettant d'obtenir 4 coupes:
   ○ une coupe de gaz de pétrole liquéfié (GPL) (A),
   ○ une coupe C5 - C8 : Naphta (B),
   ○ une coupe C9 - C15 kérosène densifié (C),
   ○ une coupe C16 - C22 : Coupe Gasoil densifié (D).

Selon un mode de réalisation de l'invention, l'étape de reformage est réalisée à une température comprise entre 350°C et°540°C, une pression comprise entre 0,2 et 2 MPa.

Selon un mode de réalisation de l'invention, l'étape de reformage est réalisée avec un taux de recycle compris entre 1,5 et 7. Le taux de recycle étant le rapport du débit molaire d'hydrogène sur le débit molaire de charge hydrocarbonée.

Selon un mode de réalisation de l'invention, le procédé comprend une étape de fractionnement, réalisée avant l'étape de reformage, de la charge en deux coupes hydrocarbonées, une première coupe comprenant entre 9 et 15 carbones et une deuxième coupe comprenant entre 16 et 22 carbones.

Selon un autre mode de réalisation de l'invention, le procédé comprend une deuxième étapes de reformage indépendante de la première étape de réformage, la première étape de reformage pour la première coupe et la deuxième étape de reformage pour la deuxième coupe.

Selon un mode de réalisation de l'invention, le procédé comprend une étape de régénération du catalyseur de reformage.

Selon un mode de réalisation de l'invention, l'étape de régénération du catalyseur est commune aux deux étapes de reformage des deux coupes.

Selon un autre mode de réalisation de l'invention, le procédé comprend deux étapes de régénération du catalyseur indépendantes, une première étape de régénération de catalyseur associée à la première étape de reformage de la première coupe et une deuxième étape de régénération de catalyseur associée à la deuxième étape de reformage de la deuxième coupe.

Selon un autre mode de réalisation de l'invention, le procédé comprend une deuxième étape de distillation, une première étape de distillation du premier effluent issu de la première étape de reformage et une deuxième étape de distillation du deuxième effluent issu de la deuxième étape de reformage.

Selon un autre mode de réalisation de l'invention, ladite charge utilisée dans ledit procédé est issue de la technologie XTL ou de l'hydrotraitement d'huiles végétales ou animales

L'invention concerne également un dispositif de reformage catalytique d'une charge composée d'une ou plusieurs coupes hydrocarbonées comprenant entre 9 et 22 carbones mettant en oeuvre le procédé selon l'invention comprenant au moins une unité de reformage et au moins une unité de régénération du catalyseur de reformage comprenant entre 1 et 6 lits de combustion.

Selon un mode de réalisation de l'invention, le dispositif comprend une deuxième unité de reformage catalytique.

Selon un autre mode de réalisation de l'invention, le dispositif comprend une deuxième zone de régénération du catalyseur, associée à la deuxième zone de reformage catalytique.

Selon un mode de réalisation de l'invention, le dispositif comprend une section de distillation d'un effluent issu d'au moins une zone de reformage catalytique.

Selon un autre mode de réalisation de l'invention, le dispositif comprend une deuxième section de distillation pour l'effluent issu de la deuxième zone de reformage catalytique.

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique d'une première variante du procédé selon l'invention,
- la figure 2 est une représentation schématique d'une deuxième variante du procédé selon l'invention,
- la figure 3 est une représentation schématique d'une troisième variante du procédé selon l'invention.

Le procédé selon l'invention consiste à reformer une charge composée d'une ou plusieurs coupes hydrocarbonées comprenant entre 9 et 22 carbones, également appelé distillat moyen. Selon un mode de réalisation de l'invention la charge composée d'une ou plusieurs coupes hydrocarbonées comprenant entre 9 et 22 carbones peut être préalablement fractionnée par un fractionneur avant l'étape de reformage pour être séparée en deux coupes: une coupe comprenant entre 9 et 15 carbones (coupe kérosène) et une coupe comprenant entre 16 et 22 carbones (coupe gasoil). Ce fractionnement a pour but de simplifier les opérations suivantes, notamment l'étape de reformage.

Le procédé peut également être mis en oeuvre avec ajout d'une charge comprenant entre 6 et 9 carbones (coupe naphta) par réduction du point initial de la coupe.

Le procédé permet ainsi d'obtenir des hydrocarbures dans la gamme des coupes de gaz de pétrole liquéfié (GPL), naphta, diesel et kérosène, et plus particulièrement des hydrocarbures dans la gamme des coupes naphta, diesel et kérosène d'intervalle de distillation en point initial selon la norme D-86 compris entre respectivement 20 et 40 °C, 170 et 190°C et 220 et 260°C.

Les coupes hydrocarbonées peuvent être issues de technologie XTL, incluant les technologies BTL, CTL et GTL, ou issues de l'hydrotraitement d'huiles végétales ou animales. Ces charges ou distillat sont majoritairement constituées de paraffines et d'iso paraffines et présentent donc des densités faibles ne répondant pas aux spécifications produit finis du marché.

La ou les coupes sélectionnées formant la charge sont envoyées dans au moins une première étape de réformage, dans au moins une unité de réformage en présence d'un catalyseur de reformage afin que les hydrocarbures essentiellement paraffiniques présents dans la charge se transforment en aromatiques qui sont des composés de densité élevé, permettant ainsi de respecter les spécifications finales du produit commercial recherché kérosène et/ou gasoil. Cette étape de reformage permet également la production d'un flux d'hydrogène.

Selon une variante de l'invention, une première charge formée de coupes comprenant entre 9 et 15 atomes de carbones, de préférence entre 9 et 13 atomes de carbones, est envoyée dans une première unité de reformage de distillat CCR et une deuxième charge formée de coupes comprenant entre 16 et 22 atomes de carbone est envoyée dans une deuxième unité de reformage de distillat CCR. Ces deux charges (C₉-C₁₅ et C₁₆-C₂₂) peuvent être issues de l'étape de fractionnement de la charge C₉-C₂₂. Les deux unités de reformage étant indépendantes.

La section réactionnelle CCR utilisée dans le procédé de reformage catalytique de la présente l'invention comporte entre 1 et 5 réacteurs en série, et de préférence entre 2 et 4 réacteurs en série, travaillant en lit mobile.

Concernant la technologie de la zone réactionnelle, deux cas sont possibles:
- Les réacteurs sont disposés côte à côte, le catalyseur étant transporté du fond d'un réacteur en tête du suivant, puis arrivé au dernier réacteur, il est amené vers la colonne de régénération par une ligne d'élévation,
- Les réacteurs sont disposés en empilement vertical et le catalyseur s'écoule alors par gravité d'un réacteur au suivant situé au dessous. Une ligne d'élévation en fond du dernier réacteur permet d'introduire le catalyseur en tête de la colonne de régénération.

La présente invention est parfaitement compatible avec ces deux technologies, l'une dite "côte à côte", l'autre dite "empilement" (side by side ou stacked selon la terminologie anglo saxonne ).
Les conditions opératoires sont les suivantes:
- Température comprise entre 350°C et 540°C, et de préférence entre 400°C à 500°C,
- Pression comprise entre 0,2 MPa et 2 MPa et de préférence entre 0,35 MPa et 1,5 MPa.
- Taux de recycle : plus important que le reformage classique de naphta, est compris entre 1,5 et 7 et de préférence entre 2 et 6, et de manière très préférée entre 3 et 5 afin de limiter le cokage du catalyseur.
Les conditions opératoires étant adaptées en fonction des coupes sélectionnées C₅ - C₉, C₉- C₁₅ et C₁₆ - C₂₂ par exemple.

Le catalyseur utilisé dans l'unité de reformage est un catalyseur de reformage classique bien connu de l'homme du métier.

Selon une variante de l'invention, le catalyseur comprend généralement un support comprenant au moins un oxyde réfractaire et/ou une ou plusieurs zéolites. Il comprend au moins un métal noble, de préférence le platine. Il comprend éventuellement un ou plusieurs éléments additionnels sélectionnés dans le groupe constitué par les éléments du groupe IA, IIA, les lanthanides, les éléments du groupe IV A de préférence le silicium et/ou l'étain, les éléments du groupe IIIB, les éléments du groupe III A, de préférence l'indium, les éléments du groupe VA, de préférence le phosphore et les éléments du groupe VIIB, de préférence le rhénium.

Selon une variante de l'invention, le catalyseur utilisé, dans l'unité de reformage classique et dans l'unité de reformage de distillat, est un catalyseur de reformage ayant les caractéristiques suivantes:
- Catalyseurs Platine/Etain ou Platine/Iridium avec des teneurs en Platine de 0,05% à 1%, de préférence de 0,15% à 0,4% avec une formulation multipromues (Germanium, Indium, Phosphore, Gallium, Bismuth),
- surface spécifique pour s'affranchir de contraintes diffusionnelles : de 50 m²/g à 300m²/g, de préférence de 80 m²/g à 200 m²/g
- répartition de la taille de pores et métaux : couche fine de support de surface spécifique 80 à 250 m²/g sur un support à très faible surface spécifique,
- sous forme de billes.

La répartition du catalyseur dans l'unité de reformage de distillat peut être graduelle ou plate.

La distribution graduelle de catalyseur est décrite dans le brevet US 5 858 205. Elle consiste à répartir le catalyseur de manière croissante dans chacun des réacteurs de l'unité de reformage. Par exemple pour 3 réacteurs, le premier réacteur comprend 20% poids de catalyseur, le deuxième réacteur comprend 30% poids du catalyseur et le troisième réacteur comprend 50% poids de catalyseur. Dans le cas de 4 réacteurs, le premier comprend par exemple 10% de catalyseur, le deuxième en comprend 15%, le troisième en comprend 25% et le quatrième en comprend 50%.

La distribution plate de catalyseur est décrite dans le brevet FR 2 926 819, et consiste à répartir de façon identique dans chacun des réacteurs de l'unité de reformage. Pour par exemple 3 réacteurs, la répartition est telle que chacun des 3 réacteurs comprends entre 30 et 36% poids de catalyseur. Dans le cas de 4 réacteurs, la répartition est telle que chacun des 4 réacteurs comprend entre 22 et 28% poids du catalyseur.

Selon une variante du procédé selon l'invention, le catalyseur est régénéré dans une zone de régénération du catalyseur qui comprend elle même un certain nombre d'étapes, dont une étape de combustion, réalisée dans un lit à combustion, du coke déposé sur le catalyseur dans la zone réactionnelle, une étape d'oxychloration, réalisée dans une zone d'oxychloration, permettant de re-disperser les cristallites, une étape de calcination et une étape finale de réduction du catalyseur à l'hydrogène qui permet de réduire les oxydes du catalyseur avant sa réintroduction dans la zone réactionnelle. La régénération peut également comporter une étape de lavage et séchage des gaz de régénération.

Lors de l'étape de combustion qui a lieu dans un lit à combustion, le catalyseur est généralement traité sous une pression de 3 à 10 bar et à une température comprise entre 350 et 550°C par un gaz de combustion comprenant 0,01 à 1,3 % d'oxygène en volume et circulant à co-courant du catalyseur.

La zone de combustion peut comprendre au moins un deuxième lit. Le catalyseur y est généralement traité sous une pression de 3 à 10 bar. Cette pression est en général proche de celle qui règne dans le premier lit de combustion.

La température dans le deuxième lit est généralement supérieure d'au moins 20°C à la température qui règne dans le premier lit.

La combustion dans le deuxième lit a généralement lieu en présence du gaz ayant circulé à travers le premier lit et en présence d'une partie de l'effluent provenant de la sortie de la zone d'oxychloration. De plus, un gaz inerte d'appoint, préférentiellement de l'azote, ainsi qu'un flux air d'appoint peut également être ajouté dans ce deuxième lit.

L'objectif est que le catalyseur soit au contact d'un gaz comprenant entre 0,01 et 1,3 % volume d'oxygène, ces gaz circulant à co-courant du catalyseur.

Le dispositif mettant en oeuvre le procédé selon l'invention comporte une zone de régénération qui peut comporter plusieurs sections de brûlage de coke (également appelée lit de combustion) en série afin de limiter l'exothermicité de la réaction (par exemple deux pour le naphta, trois à cinq pour les coupes consistant en le distillat moyen Kérosène / Gasoil). Le traitement de charges de type distillat moyen Kérosène /Gasoil dans une unité type CCR peut entrainer de forts dépôts de coke sur le catalyseur par rapport à ce que l'homme du métier peut connaitre de l'opération orientée essence. Dans cette dernière application, le brûlage du coke sur le catalyseur dans la zone de régénération est effectué classiquement avec 1 à 3 zones de brûlage , et plus particulièrement 1 à 2. Pour l'application Kérosène / Gasoil, cette invention peut requérir entre 1 à 6 zones de brûlage, préférablement entre 1 à 4.

Dans la zone d'oxychloration le catalyseur est généralement traité à contre-courant par un mélange d'un gaz comprenant de l'oxygène qui provient:
- en partie de la zone de calcination
- en partie du recyclage via une soufflante de l'effluent gazeux de la zone d'oxychloration lorsqu'elle existe,
- en partie d'un appoint d'oxygène, de préférence sous forme d'air,
- en partie d'une fraction du gaz issue de la section de lavage et de la section de séchage lorsqu'elles existent.

Le ou les agents chlorant sont généralement sélectionnés dans le groupe constitué par le chlore, le chlorure d'hydrogène les hydrocarbures halogénés comprenant moins de 4 atomes de carbone et de 1 à 6 atomes de chlore.

Par exemple, il peut s'agir de C₂Cl₄, CCl₄ ou de tout agent chlorant connu dans ces procédés de régénération pour libérer du chlore. Ils sont introduits de préférence en mélange avec le gaz comprenant de l'oxygène.

Lorsque la zone d'oxychloration est composée de lits mobiles et axiaux, on introduit généralement l'agent chlorant dans la partie inférieure de la zone d'oxychloration pour qu'il s'écoule à contre-courant du catalyseur.

L'eau peut être amenée sous forme liquide ou vapeur, de préférence sous forme vapeur. L'eau ou le précurseur d'eau peuvent être amenés dans la zone d'oxychloration en mélange avec le gaz comprenant de l'oxygène.

Le rapport molaire H₂O/HCl dans la zone d'oxychloration est compris entre 1 et 50, de préférence entre 1 et 40, et de manière très préférée entre 1 et 30.

L'étape d'oxychloration se déroule en présence d'un gaz comprenant moins de 40%, de préférence moins de 30%, de manière préférée moins de 21 % volume d'oxygène, de manière très préférée entre 4% et 21 % volume d'oxygène, de manière encore plus préférée entre 10% et 21 % volume d'oxygène et au moins 50 ppm poids de chlore, à une température comprise entre 350 et 600°C, de préférence entre 350 et 550°C, de manière plus préférée entre 450 et 550°C, de manière très préférée entre 490 et 550°C.

La pression dans cette zone est comprise entre 3 et 10 bar pour les procédés en lit mobile, en particulier pour les procédés de reformage à faible pression. Le temps de séjour du catalyseur dans l'étape d'oxychloration est généralement inférieur à 3 heures, de préférence compris entre 30 minutes et 3 heures.

L'étape de calcination est réalisée dans la zone de calcination dans laquelle le catalyseur est traité pendant 20 à 160 minutes à une température comprise entre 350 et 600°C sous une pression comprise entre 3 et 10 bar, par un appoint d'air sec mélangé éventuellement avec une partie des gaz en provenance de la section de lavage. Le gaz d'alimentation de la zone de calcination comprend au plus 21 % volume d'oxygène. Il circule généralement à contre-courant du catalyseur dans le cas des procédés à lit mobile avec zone de calcination axiale.

Selon une variante, le seul appoint en gaz comprenant de l'oxygène est réalisé en entrée de la zone de calcination.

L'étape de calcination est suivie d'une étape de réduction du catalyseur à une pression comprise entre 0.3 et 1 MPa et une température comprise entre 420 et 550°C.

Selon un mode de réalisation de l'invention, l'effluent gazeux du lit de combustion est généralement envoyé, en mélange avec une partie des effluents gazeux de la zone d'oxychloration, vers une section de lavage. Une partie de l'effluent de cette section de lavage est purgée et l'autre partie est généralement envoyée vers une section de séchage puis est généralement envoyée vers un compresseur. L'effluent du compresseur est généralement envoyé en partie vers le lit de combustion et éventuellement en partie vers les zones d'oxychloration et de calcination.

Il est connu de l'homme du métier que le principal facteur de vieillissement d'un catalyseur de CCR résulte des conditions hydrothermales que connait le catalyseur lors des différentes étapes de la régénération. L'application d'une section procédé permettant de réduire la teneur en eau des effluents de brûlage en amont ou en aval des sections de brûlage, et quelque soit la méthode appliquée (condensation par réduction de température et/ou séchage par captation sur une masse dédiée) permet de ralentir ce processus de vieillissement et assurer une fiabilité des performances de l'unité sur de longues périodes d'opération.

Après la zone de régénération, le catalyseur est réintroduit en tête du premier réacteur de la zone réactionnelle.

Selon une autre variante du procédé selon l'invention, lorsque au moins deux unités de reformage catalytique sont utilisées, les unités ont une zone commune de régénération du catalyseur, également appelée boucle commune de régénération du catalyseur. Cette zone commune fonctionne de la même façon qu'une zone de régénération classique. Elle est alimentée par au moins deux flux de catalyseur usé et alimente elle même au moins deux unités de reformage en catalyseur régénéré.

Selon une autre variante du procédé selon l'invention, chaque unité de reformage possède sa propre zone de régénération dont la configuration (nombre de lit de combustion) peut être identique ou différente.

Ce type de configuration avec une boucle commune, permet d'économiser au moins une section de régénération de catalyseur.

A l'issue de l'étape de reformage, l'effluent obtenu est envoyé dans une section de fractionnement ou distillation. Lorsqu'il y a deux unités de reformage traitant deux charges (C₉-C₁₅ et C₁₆-C₂₂) les effluents obtenus sont envoyés, chacun, dans une zone de fractionnement distincte ou dans une zone de fractionnement commune. Au cours de cette étape de fractionnement l'effluent est fractionné en différentes coupes:
- une coupe de gaz de pétrole liquéfié (GPL),
- une coupe comprenant des hydrocarbures ayant de 5 à 8 atomes de carbone (C₅ - C₈) Naphta (point initial d'ébullition compris entre 20 et 40°C selon la norme D-86, de préférence égal à 30°C et point final d'ébullition compris entre 150 et 200°C selon la norme D-86, de préférence égal à 180°C),
- une coupe comprenant des hydrocarbures ayant de 9 à 15 atomes de carbone (C₉ - C₁₅) kérosène densifié (point initial d'ébullition compris entre 170 et 190°C selon la norme D-86, de préférence égal à 180°C et point final d'ébullition compris entre 220 et 270°C selon la norme D-86, de préférence égal à 250°C),
- une coupe comprenant des hydrocarbures ayant de 16 à 22 atomes de carbone (C₁₆ - C₂₂) : Coupe Gasoil densifié (point initial d'ébullition compris entre 230 et 260°C selon la norme D-86, de préférence égal à 250°C et point final d'ébullition compris entre 320 et 370°C selon la norme D-86, de préférence égal à 350°C).

Ce nouveau procédé de reformage de distillat se distingue du procédé de reformage de naphta classique par le fait que le point de coupe final selon la norme D-86 de la charge n'est plus de 180°C-210 °C mais peut aller jusqu'à 300°C-350°C pour respectivement une application kérosène ou Gasoil.

Par analogie avec le procédé de reformage de coupes naphta seules, ce procédé permet une production importante d'hydrogène, améliorant ainsi le bilan hydrogène de la raffinerie ou du complexe XTL (post traitement éventuel nécessaire suivant l'origine principalement GTL, CTL et BTL) ou des produits issus de l'hydrotraitement d'huiles végétales ou animales.

La sévérité de l'opération de ce type de procédé peut être contrôlée afin de limiter si nécessaire la concentration en aromatique dans l'effluent réactionnel. On parle alors de procédé à haute ou à faible conversion en aromatique.

Selon un autre mode de réalisation de l'invention, le procédé selon l'invention peut être mis en oeuvre dans une unité de reformage de type CCR avec injection étagée des différentes charges: Naphta, Kérosène puis gasoil ou naphta, gasoil puis kérosène.

Selon un autre mode de réalisation de l'invention, le procédé selon l'invention peut être mis en oeuvre dans une unité de reformage de type CCR dont les sections réactionnelles sont indépendantes pour chaque charge différente (Naphta, Kérosène, gasoil) et une section de régénération commune.

### Variantes préférées de l'invention:

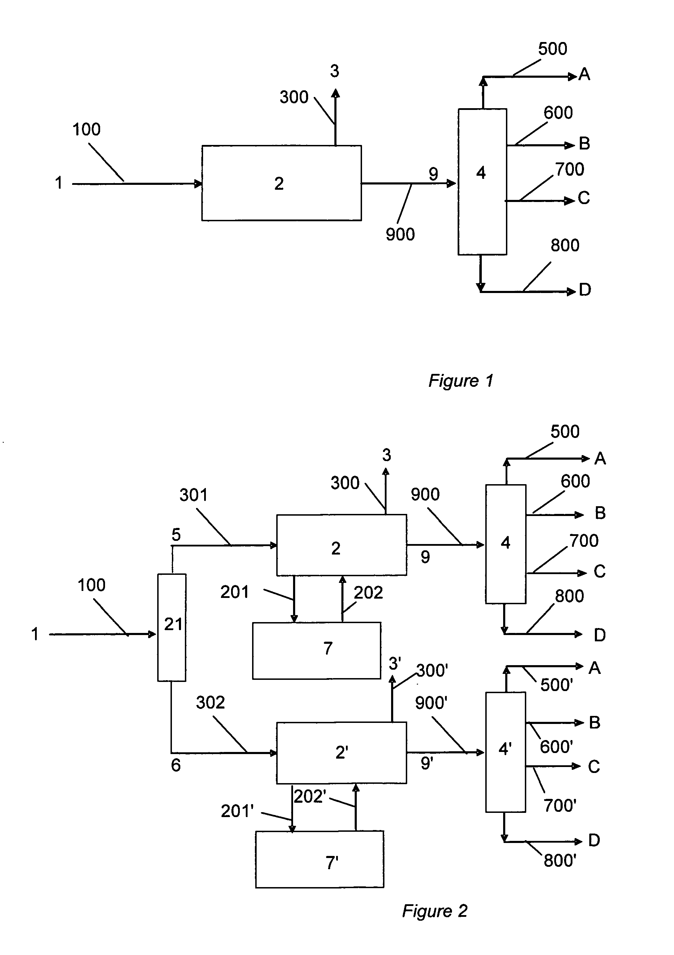

Les figures 1 à 3 représentent trois variantes possibles du procédé selon l'invention.

La figure 1 illustre une variante dans laquelle une charge (1) composée d'une ou plusieurs coupes hydrocarbonées comprenant entre 9 et 22 carbones, également appelé distillat moyen, est envoyée dans une unité de reformage (2), via une ligne (100) arrivant dans l'unité de reformage (2). Un flux d'hydrogène (3) produit est évacué par la ligne (300) provenant de l'unité de reformage (2). L'effluent (9) de la section réactionnelle de reformage (2) est ensuite envoyé dans une zone de distillation (4) via la ligne (900) reliant l'unité de reformage (2) à l'unité de distillation (4). L'effluent (9) est ainsi distillé en 4 coupes:
- une coupe de gaz de pétrole liquéfié (GPL) (A) évacuée via la ligne (500),
- une coupe C5 - C8 : Naphta (B) évacuée via la ligne (600),
- une coupe C9 - C15 kérosène densifié (C) évacuée via la ligne (700),
- une coupe C16 - C22 : Coupe Gasoil densifié (D) évacuée via la ligne (800).

La figure 2 illustre une variante dans laquelle une charge (1) composée d'une ou plusieurs coupes hydrocarbonées comprenant entre 9 et 22 carbones, de préférence également appelé distillat moyen, est envoyée dans une unité de fractionnement (21). Cette unité (21) permet de fractionner la charge en deux coupes, une première coupe comprenant entre 9 et 15 carbones (5) et une deuxième coupe comprenant entre 16 et 22 carbones (6). La première coupe comprenant entre 9 et 15 carbones (5) est évacuée par une première ligne (301) reliant le fractionneur (21) à une première unité de reformage (2). La deuxième coupe comprenant entre 16 et 22 carbones (6) est évacuée par une deuxième ligne (302) reliant le fractionneur (21) à une deuxième unité de reformage (2'). Chacune des deux unités de reformage (2,2') comporte une zone de régénération du catalyseur (7, 7'). Le catalyseur usagé provenant de la première unité de reformage (2) est envoyé via la ligne (201) à la première zone de régénération (7) et le catalyseur régénéré est renvoyé dans la première unité de reformage (2) via la ligne (202). Les même étapes sont réalisées pour la deuxième unité de reformage (2') où le catalyseur usagé provenant de la deuxième unité de reformage (2') est envoyé via la ligne (201') à la deuxième zone de régénération (7') et le catalyseur régénéré est renvoyé dans la deuxième unité de reformage (2') via la ligne (202'). Un flux d'hydrogène (3) produit est évacué par la ligne (300) provenant de la première unité de reformage (2) et un flux d'hydrogène (3') produit est évacué par la ligne (300') provenant de la deuxième unité de reformage (2'). Les effluents (9, 9') de chacune des deux zones réactionnelles de reformage (2, 2') sont ensuite envoyés dans une zone de distillation distincte pour chaque effluent (4, 4') via la ligne (900, 900') reliant chacune une unité de reformage (2, 2') à une unité de distillation (4,4'). Chacun des effluents (9, 9') est ainsi fractionné en 4 coupes:
- une coupe de gaz de pétrole liquéfié (GPL) (A) évacuée via la ligne (500, 500'),
- une coupe C5 - C8 : Naphta (B) évacuée via la ligne (600, 600'),
- une coupe C9 - C15 kérosène densifié (C) évacuée via la ligne (700, 700'),
- une coupe C16 - C22 : Coupe Gas oil densifié (D) évacuée via la ligne (800, 800').

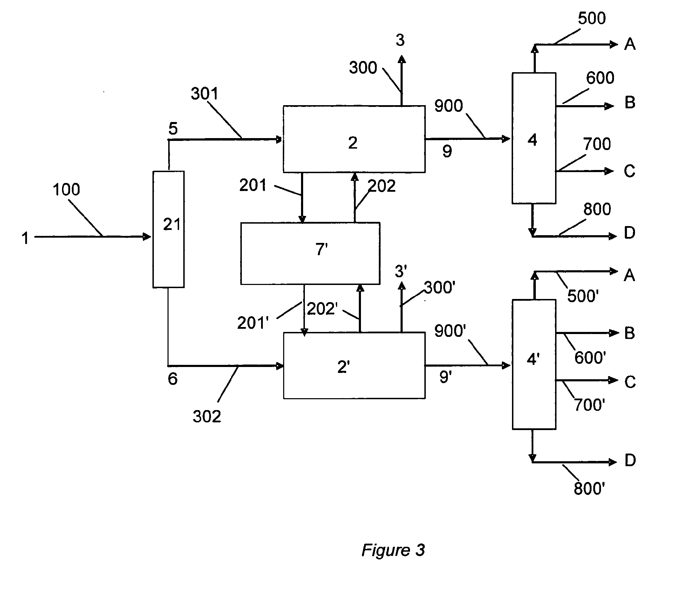

Selon une autre variante de l'invention, non illustrée, dérivée de celle illustrée sur la figure 3, les effluents de chacune des deux zones réactionnelles de reformage ayant une zone de régénération distincte sont ensuite envoyés dans une zone de distillation commune. Le mélange des deux effluents est ainsi fractionné en 4 coupes:
- une coupe de gaz de pétrole liquéfié (GPL),
- une coupe C5 - C8 : Naphta,
- une coupe C9 - C15 kérosène densifié,
- une coupe C16 - C22 : Coupe Gasoil densifié.

La figure 3 illustre une variante dans laquelle une charge (1) composée d'une ou plusieurs coupes hydrocarbonées comprenant entre 9 et 22 carbones, également appelée distillat moyen, est envoyée dans une unité de fractionnement (21). Cette unité (21) permet de fractionner la charge en deux coupes, une première coupe comprenant entre 9 et 15 carbones (5) et une deuxième coupe comprenant entre 16 et 22 carbones (6). La première coupe comprenant entre 9 et 15 carbones (5) est évacuée par une première ligne (301) reliant le fractionneur (21) à une première unité de reformage (2). La deuxième coupe comprenant entre 16 et 22 carbones (6) est évacuée par une deuxième ligne (302) reliant le fractionneur (21) à une deuxième unité de reformage (2'). Ces deux unités de reformage (2,2') comportent une zone de régénération commune du catalyseur (7). Le catalyseur usagé provenant des deux unités de reformage (2, 2') est envoyé via les lignes (201, 201') à la zone de régénération (7') et le catalyseur régénéré est renvoyé à chacune des deux unités de reformage (2, 2') via les lignes (202, 202'). Un flux d'hydrogène (3) produit est évacué par la ligne (300) provenant de la première unité de reformage (2) et un flux d'hydrogène (3') produit est évacué par la ligne (300') provenant de la deuxième unité de reformage (2'). Les effluents (9, 9') de chacune des deux zones réactionnelles de reformage (2, 2') sont ensuite envoyés dans une zone de distillation distincte pour chaque effluent (4, 4') via la ligne (900, 900') reliant chacune une unité de reformage (2, 2') à une unité de distillation (4,4'). Chacun des effluents (9, 9') est ainsi fractionné en 4 coupes:
- une coupe de gaz de pétrole liquéfié (GPL) (A) évacuée via la ligne (500, 500'),
- une coupe C5 - C8 : Naphta (B) évacuée via la ligne (600, 600'),
- une coupe C9 - C15 kérosène densifié (C) évacuée via la ligne (700, 700'),
- une coupe C16 - C22 : Coupe Gasoil densifié (D) évacuée via la ligne (800, 800').

Selon une autre variante de l'invention, non illustrée, dérivée de celle illustrée sur la figure 3, les effluents de chacune des deux zones réactionnelles de reformage ayant une zone de régénération commune sont ensuite envoyés dans une zone de distillation commune. Le mélange des deux effluents est ainsi fractionné en 4 coupes:
- une coupe de gaz de pétrole liquéfié (GPL),
- une coupe C5 - C8 : Naphta,
- une coupe C9 - C15 kérosène densifié,
- une coupe C16 - C22 : Coupe Gasoil densifié.

L'exemple suivant illustre un mode de réalisation de l'invention.

### Exemple selon l'invention

Des tests catalytiques de reformage selon le procédé de l'invention ont été réalisés sur une charge kérosène (C₉-C₁₅) issue du procédé Fischer Tropsch (FT). Le tableau 1 résume les principales propriétés obtenues pour les différents tests effectués (marche haute conversion en aromatique et marche basse conversion en aromatique).

**Tableau 1**

| | Kerosène avant reformage issu de FT | kerosène reformé basse conversion | kerosène reformé haute conversion | Spécification |
|---|---|---|---|---|
| Densité | 0,760 | 0,778 | 0,815 | 0,775 - 0,840 |
| Smoke point (mm) | sup à 50mm | 36 | 26 | 25,0 min |
| Freezing point (°C) | - 40 | -48 | -52 | -47°C max |
| Naphthalenes (vol%) | 0 | 0,33 | 2,03 | 3 max |

Ces résultats montrent que le procédé de reformage selon l'invention permet d'obtenir des coupes reformées répondant aux spécifications.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de reformage d'une charge composée d'une ou plusieurs coupes hydrocarbonées comprenant entre 9 et 22 carbones comprenant:
- au moins une première étape de reformage, dans au moins une unité de reformage, de la charge au cours de laquelle un flux d'hydrogène est produit,
- au moins une première étape de distillation de l'effluent issu de l'unité de reformage en présence d'un catalyseur de reformage permettant d'obtenir 4 coupes:
○ une coupe de gaz de pétrole liquéfié (GPL) (A),
○ une coupe C5 - C8 : Naphta (B),
○ une coupe C9 - C15 kérosène densifié (C),
○ une coupe C16 - C22 : Coupe Gasoil densifié (D).

2. Procédé selon la revendication 1 dans lequel l'étape de reformage est réalisée à une température comprise entre 350°C et 540°C, une pression comprise entre 0,2 et 2 MPa.

3. Procédé selon une des revendications précédentes dans lequel l'étape de reformage est réalisée avec un taux de recycle compris entre 1,5 et 7.

4. Procédé selon une des revendications précédentes comprenant une étape de fractionnement, réalisée avant l'étape de reformage, de la charge en deux coupes hydrocarbonées, une première coupe comprenant entre 9 et 15 carbones et une deuxième coupe comprenant entre 16 et 22 carbones.

5. Procédé selon la revendication 4 comprenant une deuxième étapes de reformage indépendante de la première étape de réformage, la première étape de reformage pour la première coupe et la deuxième étape de reformage pour la deuxième coupe.

6. Procédé selon une des revendications précédentes comprenant une étape de régénération du catalyseur de reformage.

7. Procédé selon une des revendications 5 à 6 dans lequel l'étape de régénération du catalyseur est commune aux deux étapes de reformage des deux coupes.

8. Procédé selon une des revendications 5 à 6 comprenant deux étapes de régénération du catalyseur indépendantes, une première étape de régénération de catalyseur associée à la première étape de reformage de la première coupe et une deuxième étape de régénération de catalyseur associée à la deuxième étape de reformage de la deuxième coupe.

9. Procédé selon une des revendications 5 à 8 comprenant une deuxième étape de distillation, une première étape de distillation du premier effluent issu de la première étape de reformage et une deuxième étape de distillation du deuxième effluent issu de la deuxième étape de reformage.

10. Procédé selon une des revendications 1 à 9 dans lequel ladite charge est issue de la technologie XTL ou de l'hydrotraitement d'huiles végétales ou animales.

11. Dispositif de reformage catalytique d'une charge composée d'une ou plusieurs coupes hydrocarbonées comprenant entre 9 et 22 carbones mettant en oeuvre le procédé selon une des revendication 1 à 10 **caractérisé en ce qu'**il comprend au moins une unité de reformage et au moins une unité de régénération du catalyseur de reformage comprenant entre 1 et 6 lits de combustion.

12. Dispositif selon la revendication 11 comprenant une deuxième unité de reformage catalytique.

13. Dispositif selon une des revendications 11 à 12 comprenant une deuxième zone de régénération du catalyseur, associée à la deuxième zone de reformage catalytique.

14. Dispositif selon une des revendications 11 à 13 comprenant une section de distillation d'un effluent issu d'au moins une zone de reformage catalytique.

15. Dispositif selon une des revendications 11 à 14 comprenant une deuxième section de distillation pour l'effluent issu de la deuxième zone de reformage catalytique.
